# EUROPEAN PATENT APPLICATION

(11) **EP 1 566 370 A2**
(43) Date of publication of application: **24.08.2005**
(21) Application number: 05250521.1
(22) Date of filing: 01.02.2005
(51) Int. Cl.: C04B 35/80, B32B 18/00

(54) **Thermo-mechanical property enhancement plies for CVI/SiC ceramic matrix composite laminates**

(30) Priority: 23.02.2004 US 784751
(71) Applicant: GENERAL ELECTRIC COMPANY, Schenectady, NY 12345 (US)
(72) Inventor: Kostar, Timothy Daniel, Nashua New Hampshire 03063 (US); Darkins, Toby George, Jr., Loveland Ohio 45140 (US); Carper, Douglas Melton, Trenton Ohio 45067 (US)
(74) Representative: Pedder, James Cuthbert

(57) **Abstract**

A ceramic matrix composite laminate (114) includes at least two directional, continuous ceramic fiber preform lamina each being formed of interwoven or braided fibers. A layer of non-woven mat includes a plurality of chopped ceramic fibers (118) mixed with a bonding agent. The non-woven mat layer is interposed between adjacent directional, continuous ceramic fiber preform lamina to substantially eliminate inter-laminar gaps formed between the adjacent directional, continuous ceramic fiber preform lamina. The additional chopped fiber content improves the interlaminar mechanical and thermomechanical material properties of resulting ceramic matrix composite laminate (114).

## Description

The present invention relates generally to a ceramic matrix composite construction and method for making same. Specifically, the present invention relates to an improved ceramic matrix composite construction and method for making same, the construction significantly improving inter-laminar mechanical and thermo-mechanical properties and increased resistance to inter-laminar cracking.

Ceramic matrix composite materials (CMCs) comprising laminated plies of continuous ceramic fiber fabric lamina in a ceramic matrix to form laminates are often used due to their high strength to weight ratio and high temperature capability. The pedigree, or fabrication history of the material, directly affects the final part performance, including baseline thermo-mechanical properties. Conventional fabrication approaches employ a lay-up, which involves the stacking of directional, continuous ceramic fiber plies of material in a specified orientation and sequence. Typically, a lay-up comprises multi-layered dry lamina from directional, continuous ceramic fiber plies or laminae. These laminae are typically composed of unidirectional or a two-dimensional interwoven or braided fabric made from continuous ceramic fiber tows.

To prepare CMCs, practiced methods of CMC densification, such as chemical vapor infiltration (CVI), are employed to deposit the matrix material, such as SiC, within the dry fiber laminate. CVI is a chemical vapor deposition process used for the preparation of ceramic matrix composites in which a chemical vapor of precursor gases that deposit SiC at a given temperature is deposited onto the porous continuous ceramic fibers or woven cloth preforms.

Adjacent two-dimensional continuous ceramic fiber woven fabric plies join at an interface. This interface typically includes a planar gap therebetween, also referred to as an inter-laminar gap, which is typically SiC matrix rich and porous, resulting in poor composite material performance properties at the porous, matrix-rich interface is substantially lacking in reinforcing ceramic fiber material. This poor composite material performance is also due to the use of the woven continuous fiber plies and the corresponding "lumpiness" of the fabric, results in proportionately large inter-laminar pores. Although three-dimensional preforming fabrication techniques are being investigated, the baseline approach remains one of directional, continuous ceramic fiber laminate lay-ups.

Therefore, what is needed is a ply construction or technique that is compatible with two-dimensional continuous fiber laminate lay-ups for ceramic matrix composites which substantially reduces the inter-laminar porosity and formation of SiC matrix rich regions between adjacent preform lamina during CVI densification processing. Additionally, the composite laminate ply construction technique must provide reinforcing fiber in this region to strengthen and/or toughen the interface region while being inexpensive to fabricate and install during laminate matrix densification processing.

One embodiment of the present invention is directed to an improved ceramic matrix composite laminate including at least two lamina of directional, continuous ceramic fiber preforms. A layer of non-woven mat construction includes a plurality of chopped fibers mixed with a bonding agent. The chopped fiber layer is interposed between at least two directional, continuous ceramic fiber preform lamina as to form an fiber reinforced interface and to reduce inter-laminar porosity formed between the adjacent directional, continuous ceramic fiber preform lamina.

An alternate embodiment of the present invention is directed to a method for fabricating a ceramic matrix composite laminate comprising at least two directional, continuous ceramic fiber preform lamina, each of the at least two preform lamina being formed of woven or braided ceramic fiber tows. The step includes providing a layer of non-woven construction comprising a plurality of chopped ceramic fibers mixed with a bonding agent interposed between adjacent directional, continuous ceramic fiber interwoven or braided preform lamina of the at least two preform lamina so that chopped fiber layer is sandwiched between the directional, continuous ceramic fiber lamina. The chopped fiber mat layer provides omni-directional fibers that fill the interface thereby preventing the faces of the directional, continuous ceramic fiber layers from forming a continuous, stratified matrix rich interface during matrix densification processing.

One advantage of the composite construction of the present invention is that it is an inexpensive approach to improving interlaminar mechanical and thermo-mechanical material properties and reducing interlaminar porosity by preventing a continuous, stratified matrix rich interface layer in the laminate.

Another advantage of the composite construction of the present invention is that it has improved inter-laminar fracture toughness and crack growth resistance. It also has improved strength and thermal conductivity, as the interface between the directional, continuous ceramic fiber plies is comprised of a layer that includes fibers with reduced porosity rather than an interface of matrix material substantially devoid of reinforcing fiber.

A further advantage of the hybridized directional, continuous ceramic fiber and chopped fiber non-woven composite laminate construction of the present invention is that the non-woven layers sandwiched between interwoven layers are compatible with conventional directional, continuous ceramic fiber lamina lay-up techniques.

The invention will now be described in greater detail, by way of example, with reference to the drawings, in which:-
Figure 1 is a perspective view of a prior art interwoven lamina.
Figure 2 is a schematic elevation view of a plurality of interwoven lamina being subjected to a prior art chemical vapor infiltration process to form a prior art CMC laminate.
Figure 3 is an enlarged, partial elevation view of the prior art CMC laminate of Figure 2.
Figure 4 is a perspective view of the non-woven layer of the present invention.
Figure 5 is a schematic elevation view of a plurality of interwoven lamina interposed with non-woven layers being subjected to a chemical vapor infiltration process to form a CMC laminate of the present invention.
Figure 6 is an enlarged, partial elevation view of the CMC laminate of Figure 5 of the present invention.

Wherever possible, the same reference numbers will be used throughout the drawings to refer to the same or like parts.

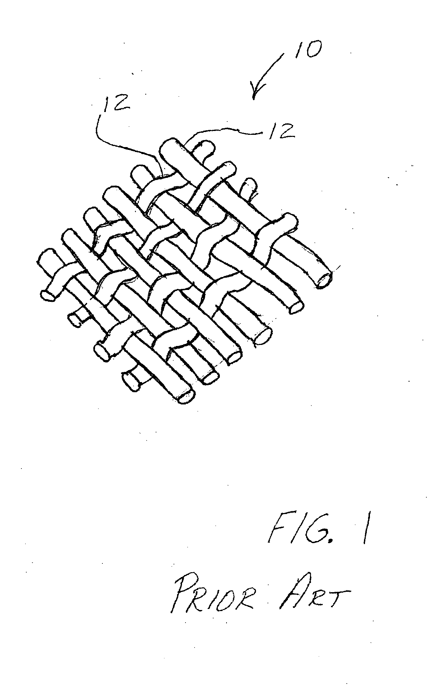

A typical composite construction to which the invention can be applied is illustrated, by means of example, in FIG. 1. Typically, textile preformed SiC fiber/SiC matrix composite laminates are fabricated with laminates or plies 10 comprised of woven or braided directional, continuous ceramic fiber lamina into a dry ply lay-up. SiC fiber, in the form of continuous fiber tow 12, is woven or braided (i.e., plain weaves, five harness satin weaves, tri-axial braids, etc.) to fabricate the plies 10 or dry laminae. These plies are then cut to shape and typically manually placed to form a layered fiber preform structure. The preform structure is placed on tooling to conform to the size and shape of the tooling and prepared for matrix densification. Other composite constructions utilize unidirectional plies, that is, the continuous fiber plies are aligned in a single direction. However, the angular orientation of the continuous fiber plies can be changed ply to ply to provide enhanced composite material properties in a plurality of directions. The composite laminate made with unidirectional plies can also have a stratified, continuous matrix rich interface between continuous fiber plies similar to interfaces found in textile preformed woven or braided continuous fiber plies.

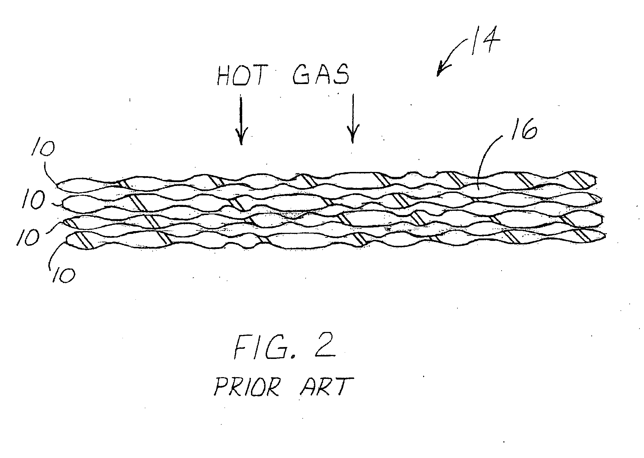

Referring to FIG. 2, SiC matrix densification is partially achieved by a chemical vapor deposition process to form laminate 14. The most commonly used chemical vapor deposition process used for the preparation of ceramic matrix composites is chemical vapor infiltration (CVI). Typically, in a CVI matrix infiltration process, a hot gas (or mixture of gasses) is then infiltrated by diffusion between the plies of continuous fiber lamina 10 and is deposited into the continuous fibers forming the tooled preform. For example, AlCl₃-H₂-CO₂, is utilized to deposit alumina onto plies comprised of porous alumina fibers or preforms to form alumina-alumina CMCs. For SiC matrices, the CVI gas includes silane and methane gas that results in the deposition of SiC onto the SiC fibers or performs to form SiC-SiC composite.

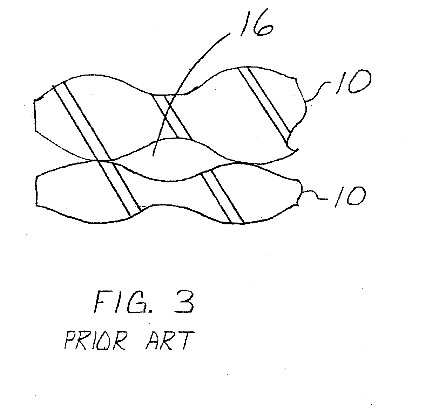

Due to the wavy or "lumpy" nature of two-dimensional woven or braided continuous fiber preform plies 10, proportionately large and irregular inter-laminar gaps 16 between plies 10 are created when continuous fiber lamina 10 are stacked or laid-up as shown in FIG. 3. With no fiber to deposit upon, the result of the CVI process is a matrix and void rich region between the continuous fiber plies of the composite laminate. Even when the interlaminar gaps are minimized, the continuous, stratified interface between the plies fills with matrix material that typically has high porosity, and is substantially devoid of fibers. This is due to the nature of matrix deposition in the CVI process. Matrix builds uniformly on the tow surfaces eventually choking off gas penetration to the gap region 16 resulting in the formation of pores. For example, neither SiC matrix rich regions nor void regions are desirable due to the reduced thermal and structural properties associated with them. Thus, the inter-laminar porosity 16 are known to be the critical region of lowest structural properties in the SiC-SiC CMC laminate at which failures are most likely to occur. The resulting lower mechanical thermo-mechanical properties limit the design envelope of design applications. Although further disclosure will be in terms of SiC-SiC CMCs, it will be understood by one skilled in the art that SiC-SiC CMC is exemplary, and the technology of the present invention is applicable to other ceramic matrix composites manufactured by CVI techniques, as such CMCs commonly share the problem of reduced inter-laminar strength.

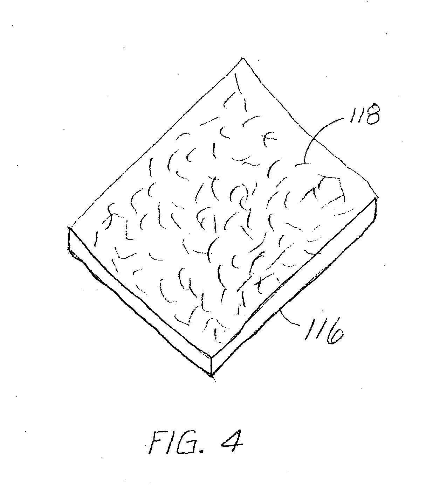

Referring to FIG. 4 is a non-woven layer 116 having a plurality of chopped fibers 118, which is typically, but not necessarily, randomly oriented with respect to each other. That is, while fibers 118 are most commonly randomly oriented, differing degrees of orientation alignment between the fibers 118 may be effected, if desired. The diameter of fiber 118 filaments ranges from about 10-20 microns (about 0.0004-0.0008 inch) with a fiber content of about 10-50 percent, with 10-20 percent being preferred. Stated another way, the porosity of the non-woven layer 116 is preferably about 80-90 percent. Typically, non-woven layer 116 is formed of raw fibers that are chopped to size, preferably about one inch or less in length. The fibers are fed into a hopper (not shown), mixed with a bonding agent, such as polyvinyl alcohol, and then pulled into a thin fabric layer, which is then dried, removing the bonding agent. This construction provides the non-woven layer or mat with a "fluffy" or "hairy" characteristic, which is due to the combination of the nature of the fabrication process, the relatively short filament length, and the substantially random fiber orientation. The mat has sufficient strength so that it can be handled for further processing, yet is very resilient. This "fluffiness" provides a beneficial void-filling capability when assembled between adjacent SiC directional, continuous ceramic fiber plies as will be discussed in further detail below. Non-woven fabric layers or mats can be fabricated having an extremely wide range of thicknesses, from about 0.001 inches to at least about 0.25 inches, although it is preferred that the fiber layers be as thin as possible for use with a CVI deposition process. Since the fabrication process is commercially available, non-woven lamina made of ceramic fibers can be produced inexpensively.

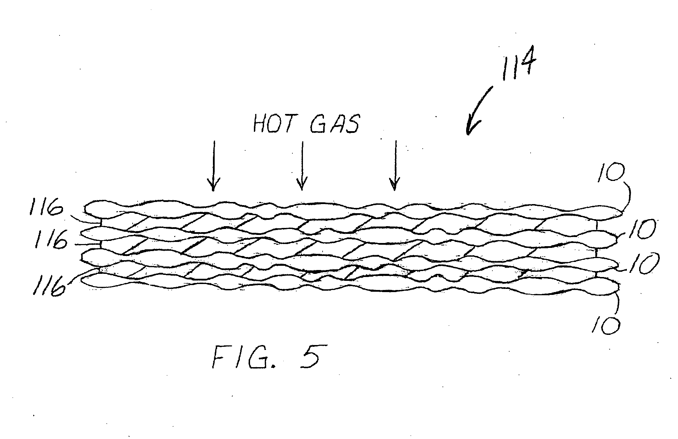

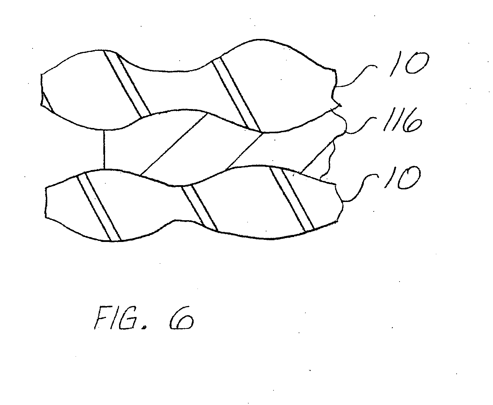

Referring to FIGS. 5-6, the advantageous application of the non-woven layer 116 of the present invention is now discussed. A preferred embodiment of the improved laminate 114, which incorporates non-woven layer 116 of chopped fiber, is otherwise the same as laminate 14. That is, the improved laminate 114 also makes use of interwoven lamina 10 or unidirectional plies, hereinafter referred to collectively as directional, continuous ceramic fiber plies, lamina or layers. However, for laminate 114, non-woven chopped fiber layers 116 are interposed between adjacent interwoven lamina 10. That is, the opposed surfaces or faces of layer 116 interface with a surface or face of each adjacent lamina 10, with the collective layers 116 and lamina 10 forming a laminate. A compressive force is applied to laminate 114 to bring the corresponding surfaces of adjacent lamina 10 closer together, locally compressing the low density, porous non-woven mat layer 116. Preferably, the thickness of layers 116 is from about 0.001-0.002 inch to provide the minimum chopped fiber volume necessary to reinforce the matrix rich interface layer. The lay-up is then subjected to a CVI process, which infiltrates the lay-up with a ceramic matrix material that fills the voids between the fibers. Due at least in part to the resilient nature or "fluffiness" of the nonwoven chopped mat 116, the size of inter-laminar voids defined by the layer 116 and lamina interfaces is substantially reduced, if not entirely removed, from between adjacent directional, continuous ceramic fiber lamina. Also, the inter-laminar voids are of significantly reduced size, and are more likely to be at least substantially filled during the CVI process as more fiber in the form of chopped fiber is available in these regions for CVI SiC deposition and the random orientation of the chopped fiber results in a portion of the fiber extending into the inter-laminar voids, which substantially uniformly distributes the inter-laminar voids, and reducing the volume fraction of the inter-laminar voids, which has previously been discussed.

By virtue of the non-woven layers 116, the resulting CMC laminate has reduced inter-laminar porosity formed between adjacent interwoven lamina 10, and of those remaining pores, the size of the pore is significantly reduced. Therefore, the non-woven layers 116 provide enhanced inter-laminar properties such as improved fracture toughness, or crack growth resistance, strength, and enhanced thermal conductivity. The fibers at the interface between the directional, continuous ceramic fiber plies improve the performance at the interface, which improves the performance of the CMC laminate. This is due to the presence of the fibers 118 in the non-woven layer 116 of laminate 114 versus the matrix rich material regions or void regions, which appear in laminate 14. While the preferred embodiment shows a single nonwoven layer interposed between adjacent directional, continuous ceramic fiber lamina, it is possible that at least two non-woven layers of similar or even significantly different thicknesses can be combined for insertion between adjacent directional, continuous ceramic fiber lamina.

The invention has been described substantially in terms of chopped mat interposed between woven continuous fiber lamina, but the invention also encompassed chopped fiber mat sandwiched between unidirectional continuous fiber lamina. And while in the preferred embodiment, the chopped fiber and the two dimensional woven, braided and/or unidirectional continuous fiber are of the same ceramic composition, the present invention also envisions the use of chopped fiber having a different composition than the continuous fiber woven, braided or unidirectional continuous fiber lamina. The invention also envisions the use of a plurality of layers of non-woven, chopped fiber mat between the directional, continuous ceramic fiber preform lamina, as required. The invention not being limited to a single layer of non-woven, chopped fiber mat. It is also envisioned that the plurality of non-woven mat fiber lamina may be of different fiber materials.

## Claims

1. An improved ceramic matrix composite laminate (114) comprising:
a plurality of preform lamina (10), each of the preform lamina (10) being formed of directional continuous fiber ceramic fiber in a ceramic matrix;
a layer of non-woven mat including a plurality of chopped ceramic fibers (118) in a ceramic matrix, the non-woven mat being interposed between adjacent preformed continuous fiber lamina (10) of the plurality of preform lamina (10) to form an interface between the continuous fiber lamina (10) which reduces voids and prevents a continuous, stratified matrix rich layer between adjacent continuous fiber preform lamina (10); and
a matrix of compatible ceramic material infiltrated into the continuous fiber ceramic lamina (10) and the chopped fiber non-woven mat lamina.

2. The ceramic matrix composite laminate (114) of claim 1 wherein the non-woven chopped fiber mat prior to being interposed between adjacent continuous fiber preform lamina (10) of the at least two preform lamina (10) is from about 0.001 inches to about 0.25 inches thick.

3. The ceramic matrix composite laminate (114) of claim 2 wherein the non-woven chopped fiber mat after being interposed between adjacent continuous fiber preform lamina (10) of the at least two preform lamina (10) is from about 0.001 inches to about 0.002 inches thick.

4. The ceramic matrix composite laminate (114) of claim 1 wherein the non-woven mat is comprised of randomly oriented chopped fibers (118).

5. The ceramic matrix composite laminate (114) of claim 1 wherein the chopped fibers (118) are less than about one inch in length.

6. The ceramic matrix composite laminate (114) of claim 1 wherein the chopped fibers (118) are ceramic fibers.

7. The ceramic matrix composite laminate (114) of claim 1 wherein the non-woven mat being interposed between adjacent preform lamina (10) of the plurality of preform lamina (10) reduces the number of inter-laminar voids.

8. The ceramic matrix composite laminate (114) of claim 1 wherein the non-woven mat being interposed between adjacent preform lamina (10) of the plurality of preform lamina (10) reduces the size of inter-laminar voids.

9. The ceramic matrix composite laminate (114) of claim 1 wherein the non-woven mat being interposed between adjacent preform lamina (10) of the plurality of preform lamina (10) reduces the volume fraction of inter-laminar voids.

10. The ceramic matrix composite laminate (114) of claim 1 wherein the non-woven mat being interposed between adjacent preform lamina (10) of the plurality of preform lamina (10) uniformly distributes the inter-laminar voids.
